# FASCICULE DE BREVET EUROPEEN

(11) **EP 3 008 547 B1**
(45) Date de publication et mention de la délivrance du brevet: **25.07.2018**
(21) Numéro de dépôt: 14732124.4
(22) Date de dépôt: 12.06.2014
(51) Int. Cl.: G06F 3/01, G06F 3/038, G06F 3/0346

(54) **DISPOSITIF D'ANALYSE DE MOUVEMENT D'UN ELEMENT MOBILE ET PROCEDE ASSOCIE**
VORRICHTUNG ZUR BEWEGUNGSANALYSE EINES MOBILEN ELEMENTES UND ENTSPRECHENDES VERFAHREN
DEVICE TO ANALYSE THE MOVEMENT OF A MOBILE ELEMENT AND CORRESPONDING METHOD

(30) Priorité: 14.06.2013 FR 1355570
(43) Date de publication de la demande: 20.04.2016
(73) Titulaire: Movea, 38000 Grenoble (FR)
(72) Inventeur: CARITU, Yanis, F-38134 Saint Joseph La Riviere (FR)
(74) Mandataire: Brunelli, Gérald
(86) Numéro de dépôt international: PCT/EP2014/062182
(87) Numéro de publication internationale: WO 2014/198805

(56) Documents cités:
- EP-A1- 2 169 517
- EP-A1- 2 224 314
- WO-A1-2013/034529

## Description

L'invention porte sur un dispositif d'analyse de mouvement d'un élément mobile muni de moyens de détermination de l'orientation d'un repère mobile lié en mouvement à l'élément mobile par rapport à un repère de référence.

La présente invention a pour but d'obtenir une représentation d'un geste ou mouvement mesuré par un ensemble de capteurs de mesure d'orientation, de sorte que cette représentation soit limitée en termes de place mémoire et temps de calculs nécessaires, tout en préservant l'information utile permettant d'analyser le geste.

En effet, limiter la place mémoire et le temps de calcul nécessaires à obtenir une représentation d'un mouvement ou geste à partir de mesures de capteurs de mesure d'orientation, a un intérêt croissant, notamment pour les applications pouvant être embarquées dans des terminaux mobiles, tels des téléphones mobiles, tablettes tactiles, télécommandes, contrôleurs de jeux vidéo, articles électroniques de sport ou dispositifs d'analyse biomécanique embarquant des capteurs de mouvement de très faible coût pour une orientation relativement précise. Il est connu de l'art antérieur, décrit dans les documents WO 2013 / 034529 A1, EP 2 169 517 A1, et EP 2 224 314 A1, un dispositif d'analyse de mouvement d'un élément mobile, muni de moyens de détermination de l'orientation de l'élément mobile, et muni de moyens de détermination d'une suite de facettes d'un polyèdre intersectées par un axe orienté de l'élément mobile, le polyèdre étant une approximation d'une sphère centrée sur l'élément mobile. Un but de l'invention est de résoudre les problèmes précités.

L'invention proposée est définie par les revendications indépendantes 1 et 7 ci-jointes.

Aussi, il est proposé, un dispositif d'analyse de mouvement d'au moins un élément mobile, muni, pour au moins un élément mobile, de premiers moyens de détermination de l'orientation d'un repère mobile lié en mouvement à l'élément mobile, par rapport à un repère de référence. Le dispositif comprend, en outre, des deuxièmes moyens de détermination d'au moins un lieu de points d'au moins une surface à partir d'au moins une direction respective d'un axe orienté du repère mobile lié en mouvement à l'élément mobile et de ladite surface.

Ce lieu de points sur une surface permet de limiter la taille mémoire des informations mémorisées, ou être vu comme un pré-traitement permettant d'obtenir une quantité de données limitées représentatives d'un mouvement ou geste de l'élément mobile lié en mouvement à une partie du corps humain de l'utilisateur, par exemple la main, exploitables plus facilement par une application que les signaux classiques transmis directement par des capteurs de mouvement.

Cette représentation permet de s'adapter parfaitement à une représentation spatiale proche d'une prévisualisation du geste représentatif d'un signe sémantique (lettre, chiffre, ou tout geste habituel) fait par le cerveau de l'utilisateur avant d'effectuer son geste. Tracer le lieu des points, par exemple sur une surface englobante, à partir de l'orientation d'un stylo traçant la lettre 'a' "en l'air" permet de disposer d'une trace ressemblant au 'a' sur la sphère. Cette trajectoire reconstruite est plus facilement reconnue que les signaux bruts des capteurs qui équipent le stylo.

Dans un mode de réalisation, ladite surface est dépourvue d'occlusion par rapport à au moins un point du repère mobile, ou, en d'autres termes, toute surface est telle que toute demi-droite d'origine ce point coupe au maximum en un point cette surface.

Ainsi, le lieu des points qui peut être associé à l'orientation du mobile est univoque, par exemple une seule projection de l'orientation du stylo précédemment pris comme exemple sur la dite surface.

Selon un mode de réalisation, ladite surface est tout ou partie d'une sphère, et le lieu de points respectif (pour un couple axe orienté /surface) est l'ensemble des points d'intersection entre ladite tout ou partie de sphère et ledit axe orienté attaché audit point du repère mobile.

Ainsi, on obtient un résultat prenant peu de place en mémoire, et facile à utiliser, par exemple par des applications de classifications de geste, ou de reconnaissance d'écriture, par exemple.

Un lieu de points respectifs peut être une suite ordonnée de points, auxquels il peut même être respectivement associé un instant respectif.

Selon un autre aspect, il est également proposé un système de reconnaissance de geste comprenant un dispositif tel que décrit précédemment dans lequel ladite surface est tout ou partie d'une sphère, et le lieu de points respectif est l'ensemble des points d'intersection entre ladite tout ou partie de sphère et ledit axe orienté attaché audit point (Om) du repère mobile.

Un tel système permet une classification plus facile, une compression d'informations améliorée, notamment pour une reconnaissance d'écriture en trois dimensions. En effet, la quantité d'information à traiter par une reconnaissance d'écriture est alors réduite à l'information décrivant le lieu des points d'intersection avec la sphère, ce qui comprime l'information tout en préservant l'information utile.

En variante, ladite surface peut être tout ou partie d'un polyèdre, et le lieu de points respectif (pour couple axe orienté /surface) peut être au une suite de facettes de tout ou partie dudit polyèdre comprenant le point d'intersection entre ledit polyèdre et ledit axe orienté.

Ainsi, il suffit de mémoriser un identifiant de la facette et l'instant d'intersection associé, ce qui limite la taille mémoire nécessaire. Le calcul de la dite projection sera également plus rapide étant donné le calcul d'intersection plus simple à exécuter, par exemple maximiser le produit scalaire entre l'axe orienté et les vecteurs normaux aux facettes est plus rapide que calculer l'intersection avec une surface.

Dans un mode de réalisation, le dispositif comprend des moyens de mémorisation, pour un lieu de points respectif, de durées consécutivement associées à une même facette.

Ainsi, la taille mémoire nécessaire est fortement réduite. La mémoire est donc davantage limitée en ne mémorisant que les durées passées séquentiellement sur chaque facettes, par exemple {(n° facette, durée), ,...}= {(3 ; 1.15 sec), (5 ; 1.06 sec), (4 ; 3.8 sec) ...

Selon un autre aspect, il est également proposé un système de reconnaissance de geste, comprenant un dispositif tel que décrit précédemment dans lequel ladite surface est tout ou partie d'un polyèdre, et le lieu de points respectif (pour un couple axe orienté/surface) est une suite de facettes de tout ou partie dudit polyèdre comprenant le point d'intersection entre ledit polyèdre et ledit axe orienté.

Un tel système permet de limiter la taille de mémoire utilisée, ainsi que d'améliorer le temps de traitement pour des reconnaissances de types de gestes plus "grossiers" ou pour l'analyse d'activités gestuelles relativement « tranchées », ou, en d'autres termes, relativement différenciables. Il est alors possible de régler la finesse de l'information représentative du geste en fonction du nombre de facettes du polyèdre choisi.

Selon un mode de réalisation, le dispositif est muni, en outre, de troisièmes moyens de détermination d'une translation du repère mobile lié en mouvement à l'élément mobile par rapport au repère de référence.

Ainsi, le dispositif peut détecter et qualifier une translation effectuée par un élément mobile.

Dans un mode de réalisation, lesdits deuxièmes moyens de détermination d'au moins un lieu de points d'au moins une surface utilisent, en outre, ladite translation déterminée par les troisièmes moyens de détermination.

En tenant compte du mouvement de translation d'un élément mobile, le dispositif élargit son champ gestuel et permet d'intégrer les déplacements linéaires s'ils représentent une information utile dans l'application.

En variante, le dispositif peut également comprendre des quatrièmes moyens de détermination d'un critère représentatif du caractère négligeable ou non négligeable de ladite translation par rapport à une distance moyenne entre l'origine du repère mobile et un point de la surface.

Ainsi, en fonction du caractère négligeable ou non de la translation, les deuxièmes moyens de détermination d'au moins un lieu de points d'au moins une surface peuvent ou non utiliser ladite translation déterminée par les troisièmes moyens de détermination.

Selon un autre aspect, il est également proposé un procédé d'analyse de mouvement d'un élément mobile, comprenant une première étape de détermination de l'orientation d'un repère mobile lié en mouvement à l'élément mobile par rapport à un repère de référence, et une deuxième étape de détermination d'au moins un lieu de points d'au moins une surface à partir d'au moins une direction respective d'un axe orienté du repère mobile lié en mouvement à l'élément mobile et de ladite surface.

L'invention sera mieux comprise à l'étude de quelques modes de réalisation décrits à titre d'exemples nullement limitatifs et illustrés par les dessins annexés sur lesquels :
- la figure 1 illustre schématiquement un mode de réalisation du dispositif pour lequel la surface est une sphère, selon un aspect de l'invention ;
- la figure 2 illustre schématiquement un mode de réalisation du dispositif pour lequel la surface est une portion de polyèdre, selon un aspect de l'invention ;
- la figure 3 illustre schématiquement un mode de réalisation du dispositif selon un aspect de l'invention ; et
- la figure 4 illustre schématiquement un mode de mise en oeuvre du procédé selon un aspect de l'invention.

Sur l'ensemble de figures, les éléments ayant les mêmes références sont similaires.

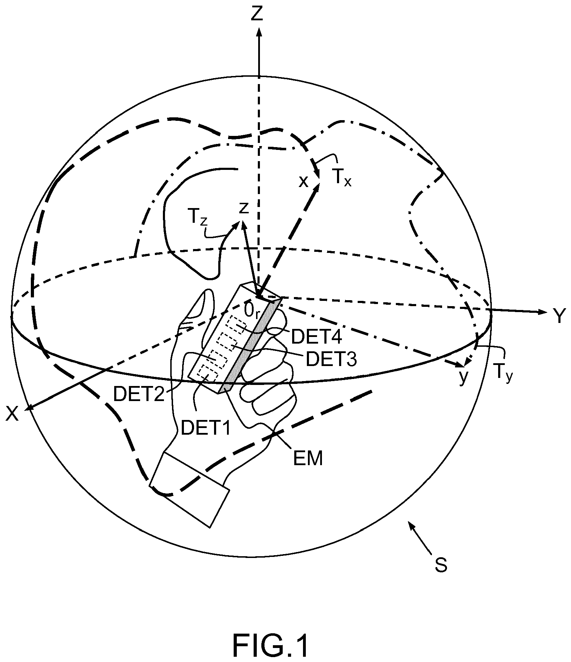

La figure 1 illustre un dispositif d'analyse de mouvement d'un élément mobile EM, muni d'un premier module de détermination DET1 de l'orientation d'un repère mobile Rm (Om,x,y,z), lié en mouvement à l'élément mobile EM, par rapport à un repère de référence Rr (Or,X,Y,Z).

Le premier module de détermination peut être embarqué dans l'élément mobile EM ou situé à distance.

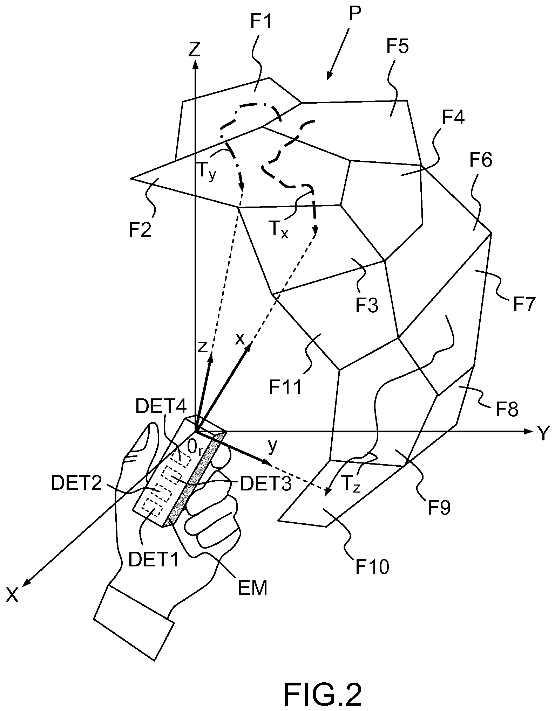

En cas d'absence de translation du repère mobile Rm par rapport au repère de référence Rr, on a Om=Or, comme illustré sur les figures 1 et 2.

L'élément mobile peut être, par exemple, un téléphone mobile, une tablette tactile, une télécommande, un contrôleur de jeux vidéo, un article électronique de sport ou un dispositif d'analyse biomécanique. En l'espèce, sur la figure 1, l'élément mobile EM représenté est une télécommande.

Bien entendu, en variante, le dispositif d'analyse de mouvement peut comprendre plusieurs éléments mobiles, par exemple fixés sur une chaîne articulée d'un corps humain ou animal.

Le dispositif d'analyse de mouvement comprend un deuxième module de détermination DET2 d'au moins un lieu de points d'au moins une surface à partir d'au moins une direction respective d'un axe orienté x, y, z du repère mobile Rm lié en mouvement à l'élément mobile EM et de ladite surface.

Un lieu de points respectifs peut être une suite ordonnée de points, auxquels il peut même être respectivement associé un instant respectif.

Sur l'exemple de la figure 1, la surface est une sphère S centrée sur l'origine Om du repère mobile Rm, et le lieu de points est la trajectoire T(t).

Toute surface dépourvue d'occlusion par rapport à au moins un point du repère mobile Rm convient, ou, en d'autres termes, toute surface telle que toute demi-droite d'origine ce point coupe au maximum en un point cette surface.

Le premier module de détermination DET1 peut, par exemple, comprendre un capteur d'orientation qui permet de suivre tout segment mobile et de fournir une matrice de rotation du repère de référence Rr (Or,X,Y,Z) en général fixe, vers le repère mobile Rm (Om,x,y,z) (ou l'inverse, sa transposée).

Par exemple, le capteur d'orientation peut être une centrale inertielle complète comprenant un triaxe d'accéléromètres, un triaxe de magnètomètres et un triaxe de gyromètres. De façon plus restreinte et économe tout en restant fonctionnel en trois dimensions, le capteur peut être une combinaison d'accéléromètres et de gyromètres, une combinaison d'accéléromètres et de magnétomètres, un gyromètre seul, une combinaison de magnétomètre et de gyromètre. Tout autre dispositif sensible apte à restituer l'information d'orientation convient : système optique à plusieurs marqueurs coplanaires, ultrasons, ...

Ce signal d'orientation est un signal à une, deux ou trois dimensions, ou respectivement à deux, trois ou quatre dimensions en ajoutant une dimension temporelle. Ce signal d'orientation est représentatif du geste effectué par l'élément mobile EM, de manière plus ou moins informative selon sa nature (selon que le geste ou mouvement est plutôt "de translation" ou plutôt "de torsion").

Le segment est repéré par un triaxe arbitraire, composé généralement de trois directions x, y, z d'origine Or, deux à deux orthogonales. L'idée consiste à exploiter, non pas les mesures des capteurs, ni les angles d'Euler, ni d'autres représentations connues telles que les matrices de rotation, les quaternions, mais les traces Tₓ, T_{y}, et T_{z} correspondant respectivement à l'intersection de l'axe x, y et z du repère mobile Rm avec la sphère S centrée en Om.

Bien entendu, en variante, on peut avoir, une ou deux traces uniquement.

Un tel prétraitement permet d'obtenir des données :
- univoques (ce qui n'est pas le cas dans l'espace des angles d'Euler ou de Cardan) ;
- facilement compressibles (par exemple par discrétisation géométrique sur la surface, en l'occurrence la sphère S découpée en secteurs arbitraires) ; et
- qui bénéficient d'une topographie bien distribuée (les éléments discrets)

Sur l'exemple de la figure 1, on prend l'axe x comme axe de pointage de l'élément mobile EM, en l'espèce la télécommande et Om comme le point moyen où se situe l'utilisateur. Cet axe orienté x, qui dessine une trajectoire dans l'esprit de l'utilisateur, intercepte ou coupe, la sphère S de centre Om et de rayon arbitraire (par exemple de rayon 1m) en une suite de points ou trace Tₓ=(x,y,z) représentatifs du geste effectué, et très probablement proche de la trajectoire attendue par le dispositif

De même, les traces T_{y} et/ou T_{z} correspondant aux intersections, des axes orientés y et z, avec la sphère S (les deux axes y et z sont liés pour la rotation autour de l'axe x) peuvent représenter ou signer une volonté de l'utilisateur de tourner l'élément mobile EM autour de son axe longitudinal x. Aussi, deux traces suffisent à décrire complètement l'attitude temporelle de l'élément mobile EM, en l'espèce l'une étant Tₓ.

Pour les systèmes actuels, une telle suite de points ou trace est en général discrète (dû à l'échantillonnage des capteurs ou au calcul numérique) et forme ainsi une trajectoire de points, généralement considérée en mémoire comme un vecteur. Le geste forme ce vecteur de points qui est à la base de la représentation en continu, sans discrétisation géométrique de la sphère S.

On voit pourquoi il est avantageux d'utiliser des dispositifs de mesure de mouvement basés sur des capteurs inertiels vu la difficulté, en l'état de la technologie de fabrication en grande série, de mesurer une trajectoire (les capteurs actuels sont bruités et pénalisent les étapes d'intégration mathématique des signaux pour passer de l'accélération à la position) tandis que, moyennant des algorithmes de l'état de l'art, il est possible d'obtenir l'orientation en trois dimensions, i.e. une matrice de rotation qui permet de projeter le point Om selon l'orientation des axes respectifs [Or,x), [Or,y), [Or,z) de l'élément mobile EM vers respectivement les points Tₓ(x,y,z), T_{y}(x,y,z), T_{z}(x,y,z) sur la sphère S.

Ainsi, le mode de représentation proposé transforme les données de mesures qui représentent ou signent le geste en ces traces ou trajectoires dessinées intentionnellement par l'utilisateur sur cette surface S. Ces trajectoires sont plus proches de l'information finale représentative de l'actuation du geste et, de fait, plus facilement compressibles, ou plus facilement classifiables par un système de reconnaissance de geste par exemple.

Dans un autre mode de réalisation, comme illustré sur la figure 2, la surface est tout ou partie d'un polyèdre, en l'espèce une partie d'un polyèdre P.

Ainsi, on a une liste de facettes, en l'espèce dix facettes F1, F2, ..., F10 caractérisées par leurs normales. Le polyèdre n'est pas forcément régulier et les facettes peuvent être numérotées. La suite de points peut alors être "réduite" et codée différemment : tant que la projection intercepte la facette Fi, en l'espèce i variant de 1 à 10, on remplace la trajectoire par le codage i. Ainsi on peut avoir une série K couples (i,j)^{k} où i est l'indice de la facette et j la durée pendant laquelle elle a été interceptée par l'axe correspondant (x, y, z), k étant l'indice du couple (k variant de 1 à K).

Si le module de détermination DET1 de l'orientation du repère mobile Rm lié en mouvement à l'élément mobile EM, par rapport au repère de référence Rr est capable de donner la matrice de rotation entre les deux repères, il suffit de prendre la première colonne cx de la matrice de rotation pour avoir le vecteur directeur de l'axe x, la deuxième colonne cy pour le vecteur directeur de l'axe y et la troisième colonne cz pour le vecteur directeur de l'axe z. Ensuite, i est trouvé en appliquant une méthode de détection de la facette interceptée.

Il existe plusieurs méthodes :
- calcul d'intersection des facettes planaires avec la demi-droite portée par Om et orientée par ledit vecteur directeur. Une seule facette (i) aura une intersection non nulle.
- Si la surface facettée est un polyèdre dont les points sont sensiblement sur une sphère, on peut détecter la facette interceptée de façon plus rapide. Pour chaque facette, on calcule une distance entre ledit vecteur directeur (VDx,VDy,VDz) de l'axe concerné et le vecteur normal (NXx,NXy, NXz). La facette interceptée sera celle de la plus faible distance calculée
- Si la surface facettée est un polyèdre dont les points sont sensiblement sur une sphère, on peut détecter la facette interceptée de façon encore plus rapide. Pour chaque facette, on calcule le produit scalaire entre ledit vecteur directeur (VDx,VDy,VDz) de l'axe concerné et le vecteur normal (NXx,NXy, NXz). La facette interceptée sera celle de plus grand produit scalaire.

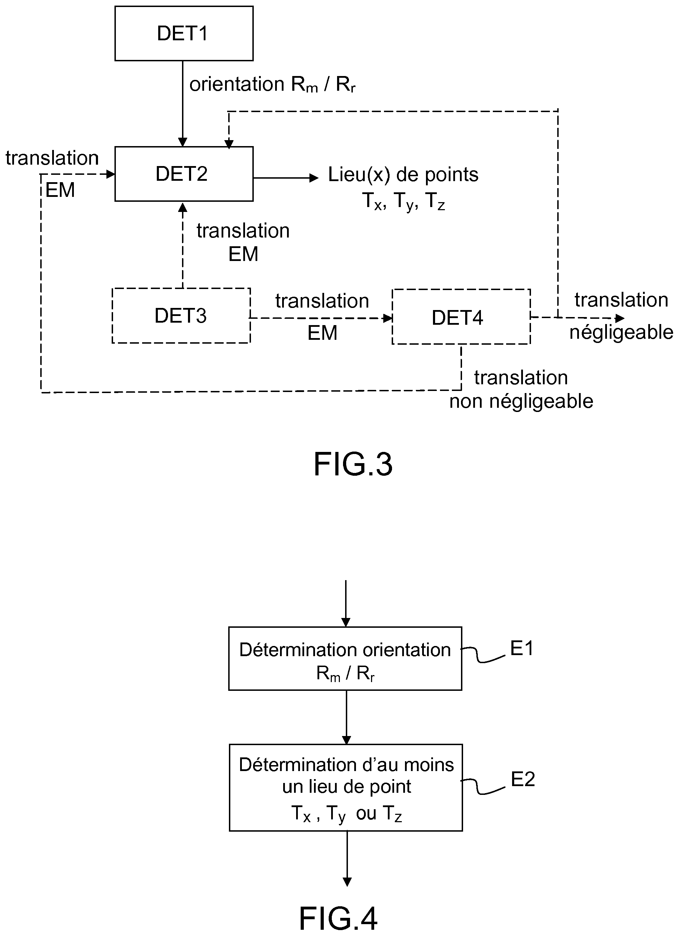

Comme illustré sur la figure 3, Le dispositif peut être muni, en outre, d'un troisième module de détermination DET3 d'une translation du repère mobile Rm (lié en mouvement à l'élément mobile EM) par rapport au repère de référence Rr.

En cas de présence d'une translation déterminée par le troisième module de détermination DET3, il est possible, de toujours tenir compte de cette translation par le deuxième module de détermination DET2.

En outre, le dispositif peut comprendre un quatrième module de détermination DET4 d'un critère représentatif du caractère négligeable ou non négligeable de ladite translation par rapport à une distance moyenne entre l'origine Om du repère mobile Rm et un point de la surface.

Ainsi, en fonction du caractère négligeable ou non de la translation, le deuxième module DET2 de détermination d'au moins un lieu de points d'au moins une surface peut ou non utiliser ladite translation déterminée par le troisième module de détermination.

Selon un autre aspect de l'invention, il est également proposé un procédé d'analyse de mouvement d'un élément mobile EM, tel qu'illustré sur la figure 4, comprenant une première étape E1 de détermination de l'orientation du repère mobile Rm lié en mouvement à l'élément mobile EM par rapport au repère de référence Rr. Le procédé comprend, en outre, une deuxième étape E2 de détermination d'au moins un lieu de points Tₓ, T_{y}, T_{z} d'au moins une surface à partir d'au moins une direction respective d'un axe orienté x, y, z du repère mobile Rm lié en mouvement à l'élément mobile EM et de ladite surface.

Les étapes du procédé décrit ci-dessus peuvent être réalisées par un ou plusieurs processeurs programmables exécutant un programme informatique pour réaliser les fonctions de l'invention en agissant sur des données d'entrée et en générant des données de sortie, dans le dispositif selon l'invention.

Un programme informatique peut être écrit dans n'importe quel langage de programmation, tels les langages compilés ou interprétés, et le programme informatique peut être déployé sous n'importe quelle forme, y compris en tant que programme autonome ou comme un sous-programme ou fonction, ou tout autre forme appropriée pour une utilisation dans un environnement informatique.

Un programme d'ordinateur peut être déployé pour être exécuté sur un ordinateur ou sur plusieurs ordinateurs sur un seul site ou sur plusieurs sites répartis et reliés entre eux par un réseau de communication.

## Revendications

1. Dispositif d'analyse de mouvement d'au moins un élément mobile (EM), muni, pour au moins un élément mobile (EM), de premiers moyens de détermination (DET1) de l'orientation d'un repère mobile (Rm) lié en mouvement à l'élément mobile (EM) par rapport à un repère de référence (Rr), le dispositif comprenant en outre des deuxièmes moyens de détermination (DET2) d'au moins une suite de facettes (F1, F2, ..., F10) de tout ou partie d'un polyèdre (P), comprenant au moins un point d'intersection entre ledit polyèdre (P) et au moins une direction respective d'un axe orienté (x, y, z) du repère mobile (Rm) lié en mouvement à l'élément mobile (EM) et audit polyèdre (P), ladite suite de facettes de tout ou partie du polyèdre (P) étant dépourvue d'occlusion par rapport à au moins un point du repère mobile (Rm), et le dispositif étant **caractérisé en ce qu'**il comprend des moyens de mémorisation (MEM) d'une suite de couples, chaque couple indiquant l'indice d'une facette (F1, F2, ..., F10) interceptée par ledit axe et la durée pendant laquelle cette facette (F1, F2, ..., F10) a été interceptée par ledit axe.

2. Dispositif selon la revendication 1, muni, en outre, de troisièmes moyens de détermination (DET3) d'une translation du repère mobile (Rm) lié en mouvement à l'élément mobile (EM) par rapport au repère de référence (Rr).

3. Dispositif selon l'une des revendications précédentes, dans lequel lesdits deuxièmes moyens de détermination (DET2) d'au moins une suite de facettes (F1, F2, ..., F10) de tout ou partie du polyèdre (P) utilisent, en outre, ladite translation déterminée par les troisièmes moyens de détermination (DET3).

4. Dispositif selon l'une des revendications précédentes, comprenant, en outre, des quatrièmes moyens de détermination (DET4) d'un critère représentatif du caractère négligeable ou non négligeable de ladite translation par rapport à une distance moyenne entre l'origine (Om) du repère mobile (Rm) et un point du polyèdre (P).

5. Système de reconnaissance de geste, comprenant un dispositif, selon l'une des revendications précédentes, de prétraitement pour une classification du geste.

6. Procédé d'analyse de mouvement d'au moins un élément mobile (EM), comprenant, pour au moins un élément mobile, une première étape (E1) de détermination de l'orientation d'un repère mobile (Rm) lié en mouvement à l'élément mobile (EM) par rapport à un repère de référence (Rr), le procédé comprenant une deuxième étape (E2) de détermination d'au moins une suite de facettes (F1, F2, ..., F10) de tout ou partie d'un polyèdre (P), comprenant le point d'intersection entre ledit polyèdre (P) et au moins une direction respective d'un axe orienté (x, y, z) du repère mobile (Rm) lié en mouvement à l'élément mobile (EM) et dudit polyèdre (P), dépourvu d'occlusion par rapport à au moins un point du repère mobile (Rm), et le procédé étant **caractérisé en ce qu'**il comprend une étape de mémorisation (MEM) d'une suite de couples, chaque couple indiquant l'indice d'une facette (F1, F2, ..., F10) interceptée par ledit axe et la durée pendant laquelle cette facette (F1, F2, ..., F10) a été interceptée par ledit axe.

## Patentansprüche

1. Vorrichtung zur Bewegungsanalyse mindestens eines mobilen Elementes (EM), versehen, für mindestens ein mobiles Element (EM), mit ersten Mitteln zur Ermittlung (DET1) der Ausrichtung eines mobilen Koordinatensystems (Rm), welches in Bewegung mit dem mobilen Element (EM) in Bezug auf ein Referenz-Koordinatensystem (Rr) verbunden ist, wobei die Vorrichtung zudem zweite Mittel zur Ermittlung (DET2) von mindestens einer Folge von Facetten (F1, F2, ..., F10) des gesamten oder eines Teils eines Mehrecks (P) beinhaltet, beinhaltend mindestens einen Schnittpunkt zwischen dem Vieleck (P) und mindestens einer jeweiligen Richtung einer ausgerichteten Achse (x, y, z) des mobilen Koordinatensystems (Rm), welches in Bewegung mit dem mobilen Element (EM) und mit dem Vieleck (P) verbunden ist, wobei die Folge von Facetten des gesamten oder eines Teils des Mehrecks (P) keinen Verschluss in Bezug auf mindestens einen Punkt des mobilen Koordinatensystems (Rm) besitzt, und wobei die Vorrichtung **dadurch gekennzeichnet ist, dass** sie Mittel zur Speicherung (MEM) einer Folge von Paaren beinhaltet, wobei jedes Paar den Index einer Facette (F1, F2, ..., F10) anzeigt, der durch die Achse abgefangen wird, und die Dauer, während welcher die Facette (F1, F2, ..., F10) von der Achse abgefangen wurde.

2. Vorrichtung nach Anspruch 1, zudem versehen mit dritten Mitteln zur Ermittlung (DET3) einer Verschiebung des mobilen Koordinatensystems (Rm), welches in Bewegung mit dem mobilen Element (EM) in Bezug auf das Referenz-Koordinatensystem (Rr) verbunden ist.

3. Vorrichtung nach einem der vorhergehenden Ansprüche, bei welcher die zweiten Mittel zur Ermittlung (DET2) von mindestens einer Folge von Facetten (F1, F2, ..., F10) des gesamten oder eines Teils des Mehrecks (P) zudem die durch die dritten Mittel zur Ermittlung (DET3) ermittelte Verschiebung benutzen.

4. Vorrichtung nach einem der vorhergehenden Ansprüche, zudem beinhaltend vierte Mittel zur Ermittlung (DET4) eines repräsentativen Kriteriums für den vernachlässigbaren oder nicht vernachlässigbaren Charakter der Verschiebung in Bezug auf einen mittleren Abstand zwischen dem Nullpunkt (Om) des mobilen Koordinatensystems (Rm) und einem Punkt des Mehrecks (P).

5. Gestenerkennungssystem, beinhaltend eine Vorrichtung nach einem der vorhergehenden Ansprüche zur Vorbehandlung für eine Gestenklassifizierung.

6. Verfahren zur Bewegungsanalyse mindestens eines mobilen Elementes (EM), beinhaltend, für mindestens ein mobiles Element, einen ersten Schritt (E1) der Ermittlung der Ausrichtung eines mobilen Koordinatensystems (Rm), welches in Bewegung mit dem mobilen Element (EM) in Bezug auf ein Referenz-Koordinatensystem (Rr) verbunden ist, wobei das Verfahren einen zweiten Schritt (E2) der Ermittlung von mindestens einer Folge von Facetten (F1, F2, ..., F10) des gesamten oder eines Teils eines Mehrecks (P) beinhaltet, beinhaltend den Schnittpunkt zwischen dem Vieleck (P) und mindestens einer jeweiligen Richtung einer ausgerichteten Achse (x, y, z) des mobilen Koordinatensystems (Rm), welches in Bewegung mit dem mobilen Element (EM) verbunden ist und des Vielecks (P), welches keinen Verschluss in Bezug auf mindestens einen Punkt des mobilen Koordinatensystems (Rm) besitzt, und wobei das Verfahren **dadurch gekennzeichnet ist, dass** es einen Schritt der Speicherung (MEM) einer Folge von Paaren beinhaltet, wobei jedes Paar den Index einer Facette (F1, F2, ..., F10) anzeigt, der durch die Achse abgefangen wird, und die Dauer, während welcher die Facette (F1, F2, ..., F10) von der Achse abgefangen wurde.

## Claims

1. A device for analyzing the movement of at least one moving element (EM), provided, for at least one moving element (EM), with first means (DET1) for determining the orientation of a moving coordinate frame (Rm) connected in motion to the moving element (EM) with respect to a reference coordinate frame (Rr), the device further comprising second means (DET2) for determining at least one series of facets (F1, F2, ..., F10) of all or part of a polyhedron (P), including at least one intersection point between said polyhedron (P) and at least one respective direction of an orientated axis (x, y, z) of the moving coordinate frame (Rm) connected in motion to the moving element (EM) and to said polyhedron (P), said series of facets of all or part of the polyhedron (P) being free of occlusion with respect to at least one point of the moving coordinate frame (Rm), and the device being **characterized in that** it comprises means of storing (MEM) a series of pairs, each pair indicating the index of a facet (F1, F2, ..., F10) intercepted by said axis and the period of time over which this facet (F1, F2, ..., F10) has been intercepted by said axis.

2. The device according to Claim 1, further equipped with third means (DET3) for determining a translation of the mobile coordinate frame (Rm) connected in motion to the moving element (EM) with respect to the reference coordinate frame (Rr).

3. The device according to any of the preceding claims, in which said second means (DET2) for determining at least one series of facets (F1, F2, ..., F10) of all or part of the polyhedron (P) further uses said translation determined by the third determining means (DET3).

4. The device according to any of the preceding claims, further comprising fourth means (DET4) for determining a criterion representative of the negligible or non-negligible nature of said translation with respect to an average distance between the origin (Om) of the moving coordinate frame (Rm) and a point on the polyhedron (P).

5. A gesture recognition system, comprising a pre-processing device, according to any of the preceding claims, for gesture classification.

6. A method for analyzing the movement of at least one moving element (EM), including, for at least one moving element, a first step (E1) of determining the orientation of a moving coordinate frame (Rm) connected in motion to the moving element (EM) with respect to a reference coordinate frame (Rr), the method including a second step (E2) of determining at least one series of facets (F1, F2, ..., F10) of all or part of a polyhedron (P), comprising the intersection point between said polyhedron (P) and at least one respective direction of an orientated axis (x, y, z) of the moving coordinate frame (Rm) connected in motion to the moving element (EM) and of said polyhedron (P), being free of occlusion with respect to at least one point of the moving coordinate frame (Rm), and the method being **characterized in that** it comprises a step of storing (MEM) a series of pairs, each pair indicating the index of a facet (F1, F2, ..., F10) intercepted by said axis and the period of time over which this facet (F1, F2, ..., F10) has been intercepted by said axis.
